# DEMANDE DE BREVET EUROPEEN

(11) **EP 1 160 743 A1**
(43) Date de publication de la demande: **05.12.2001**
(21) Numéro de dépôt: 01401373.4
(22) Date de dépôt: 23.05.2001
(51) Int. Cl.: G07F 7/02, G07F 17/20

(54) **Système de commande du fonctionnement d'au moins un équipement d'entretien d'un véhicule automobile**

(30) Priorité: 26.05.2000 FR 0006785
(71) Demandeur: Heurtaux S.a.s., 76410 Saint Aubin les Elbeuf (FR)
(72) Inventeur: Heurtaux, Bertrand Mathieu Bernard, 83230 Bormes Les Mimosas (FR)
(74) Mandataire: Habasque, Etienne Joel Jean-François

(57) **Abrégé**

Ce système de commande du fonctionnement d'au moins un équipement d'entretien (1) d'un véhicule automobile, est caractérisé en ce qu'il comporte d'une part au moins un objet portatif (2) portant un code optique d'identification (3), et d'autre part, au moins un lecteur optique (4) correspondant, raccordé à une unité de traitement d'informations (7) associée à des moyens (8) de stockage d'informations d'identification d'objet (9) et d'informations correspondantes de validation/inhibition (10) du fonctionnement de l'équipement pour reconnaître ou non l'objet portatif et valider ou inhiber le fonctionnement de l'équipement d'entretien.

## Description

La présente invention concerne un système de commande du fonctionnement d'au moins un équipement d'entretien d'un véhicule automobile.

De tels équipements d'entretien comprennent par exemple des bornes de lavage, des aspirateurs, des pompes de vidange, des bornes de gonflage de pneumatiques, etc... qui sont mis à la disposition par exemple du public pour assurer le nettoyage ou l'entretien courant des véhicules automobiles.

Il existe déjà dans l'état de la technique, un certain nombre de systèmes de commande du fonctionnement de ces équipements.

C'est ainsi par exemple que ces systèmes de commande peuvent comporter des monnayeurs à pièces ou à jetons.

Cependant, ces monnayeurs sont sujets à toute sorte de dégradations, vols, etc.

On connaît également dans l'état de la technique, des systèmes de commande qui comportent des lecteurs de cartes à circuits électroniques également connues sous le nom de cartes à puce.

Cependant, ces systèmes présentent un certain nombre d'inconvénients notamment au niveau de leur fiabilité, en raison de l'environnement sévère dans lequel ces systèmes sont implantés et amenés à fonctionner.

En effet, ces systèmes sont généralement implantés à l'air libre et peuvent être soumis à des projections d'eau ou autre par exemple, ce qui les amènent à fonctionner dans des conditions extrêmes, de sorte que ceux-ci tombent relativement fréquemment en panne.

On sait qu'il est également possible d'utiliser des systèmes de commande à transpondeur.

Cependant, ces systèmes sont relativement chers et leur diffusion en grande série est difficilement envisageable.

Le but de l'invention est donc de résoudre ces problèmes en proposant un système de commande qui soit simple, fiable et d'un coût réduit.

A cet effet, l'invention a pour objet un système de commande du fonctionnement d'au moins un équipement d'entretien d'un véhicule automobile, caractérisé en ce qu'il comporte d'une part, au moins un objet portatif portant un code optique d'identification, et d'autre part, au moins un lecteur optique correspondant, raccordé à une unité de traitement d'informations associée à des moyens de stockage d'informations d'identification d'objet et d'informations correspondantes de validation/inhibition du fonctionnemént de l'équipement pour reconnaître ou non l'objet portatif et valider ou inhiber le fonctionnement de l'équipement d'entretien.

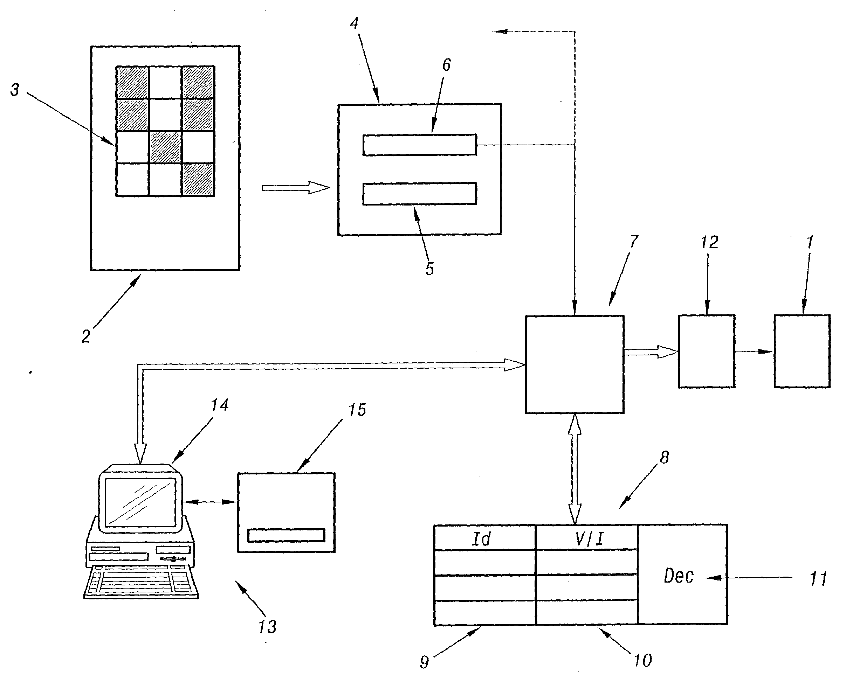

L'invention sera mieux comprise à la lecture de la description qui va suivre, donnée uniquement à titre d'exemple et faite en se référant au dessin annexé qui représente un schéma synoptique illustrant la structure générale d'un système de commande selon l'invention.

On a en effet représenté sur cette figure, un système de commande d'un équipement d'entretien d'un véhicule automobile qui est désigné par la référence générale 1.

Cet équipement est par exemple constitué par une borne de lavage de ce véhicule, un aspirateur, une borne de gonflage de pneumatiques, etc.

Ce système comporte d'une part, au moins un objet portatif désigné par la référence générale 2, qui se présente par exemple sous la forme d'une carte ou autre, portant un code optique d'identification désigné par la référence générale 3.

Différents modes de réalisation de ce code optique d'identification peuvent être envisagés.

C'est ainsi par exemple que celui-ci peut être formé par des portions opaques ou transparentes à un rayonnement lumineux, de la carte 2, des trous ménagés dans celle-ci ou encore des zones réfléchissantes ou non de couleurs différentes, agencées de manière à former un code apte à être lu par au moins un lecteur optique correspondant désigné par la référence générale 4 sur cette figure.

La carte est alors adaptée pour être introduite dans une fente, par exemple 5, de ce lecteur en regard de moyens de lecture correspondants 6.

Ce lecteur est raccordé à une unité de traitement d'informations désignée par la référence générale 7, associée à des moyens de stockage d'informations désignés par la référence générale 8.

L'unité de traitement d'informations 7 comprend par exemple tout microprocesseur approprié et les moyens de stockage 8 sont adaptés pour stocker des informations d'identification d'objets portatifs, désignées par exemple par la référence générale 9 et des informations correspondantes de validation/inhibition de l'équipement désignées par la référence générale 10.

Ceci permet alors à cette unité de traitement d'informations de reconnaître ou non un objet portatif introduit dans le lecteur et de valider ou d'inhiber le fonctionnement de l'équipement d'entretien en fonction des informations de validation/inhibition correspondantes.

Ces informations de validation/inhibition peuvent par exemple se présenter sous la forme d'un compteur d'unités de valeur, l'unité de traitement d'informations pilotant alors des moyens 11 de débit de ce compte à chaque utilisation de l'équipement.

Ces unités de valeur peuvent par exemple correspondre à de l'argent ou tout simplement à un nombre d'utilisations de l'équipement.

Bien entendu, d'autres formes d'informations de validation/inhibition peuvent être envisagées et celles-ci peuvent également se présenter sous la forme d'informations temporelles de durée limite de validité des objets portatifs, cette durée limite se présentant par exemple sous la forme d'une période de validité de la carte après la première utilisation ou encore d'une date limite de validité de celle-ci.

L'unité de traitement d'informations 7 est raccordée en sortie à une interface 12 de pilotage de l'équipement correspondant.

On conçoit alors que lorsqu'un utilisateur introduit un objet portatif tel qu'une carte dans le lecteur 4 correspondant, l'unité de traitement d'informations 7 recueille le code optique porté par celle-ci et recherche dans les moyens de stockage 8, ce code d'identification et les informations de validation/inhibition correspondantes pour reconnaître ou non l'objet et pour autoriser ou non le fonctionnement de l'équipement.

Si ces informations se présentent sous la forme d'un compte d'unités de valeur, celui-ci est alors débité.

Bien entendu, des informations de rechargement du compte ou de renouvellement des informations temporelles peuvent être envisagées.

Ces moyens sont désignés par la référence générale 13 sur cette figure et comprennent par exemple un outil du type micro-ordinateur désigné par la référence générale 14, associé par exemple à un lecteur de carte désigné par la référence générale 15.

Cet outil est alors mis à la disposition par exemple d'un gérant d'une station regroupant plusieurs équipements auquel les utilisateurs s'adressent pour recharger ou renouveler les informations de validation/inhibition moyennant par exemple le paiement d'une certaine somme d'argent.

Plusieurs équipements d'entretien peuvent être associés au sein par exemple d'une station.

Dans ce cas, chaque équipement peut être associé à un lecteur correspondant, ces lecteurs étant associés à une unité de traitement d'informations dédiée ou à une unité de traitement d'informations commune à tous les lecteurs de la station.

Plusieurs stations de ce type peuvent également être associées par l'intermédiaire par exemple d'un réseau de transmission d'informations et d'un serveur commun.

On conçoit alors que grâce à une telle structure, le système de commande selon l'invention est extrêmement fiable et sûr.

## Revendications

1. Système de commande du fonctionnement d'au moins un équipement d'entretien (1) d'un véhicule automobile, **caractérisé en ce qu'**il comporte d'une part, au moins un objet portatif (2) portant un code optique d'identification (3), et d'autre part, au moins un lecteur optique (4) correspondant, raccordé à une unité de traitement d'informations (7) associée à des moyens (8) de stockage d'informations d'identification d'objet (9) et d'informations correspondantes de validation/inhibition (10) du fonctionnement de l'équipement, pour reconnaître ou non l'objet portatif et valider ou inhiber le fonctionnement de l'équipement d'entretien.

2. Système selon la revendication 1, **caractérisé en ce que** les informations de validation/inhibition (10) se présentent sous la forme d'un compte d'unités de valeur et **en ce que** l'unité de traitement d'informations (7) pilote des moyens (11) de débit de ce compte à chaque utilisation de l'équipement.

3. Système selon la revendication 2, **caractérisé en ce que** l'unité de traitement d'informations est associée à des moyens (13) de rechargement de ce compte.

4. Système selon la revendication 1, **caractérisé en ce que** les informations de validation/inhibition se présentent sous la forme-d'-informations temporelles de durée limite de validité de l'objet portatif.

5. Système selon la revendication 4, **caractérisé en ce que** l'unité de traitement d'informations est associée à des moyens (13) de renouvellement des informations temporelles.

6. Système selon l'une quelconque des revendications précédentes, **caractérisé en ce que** plusieurs équipements d'entretien sont associés au sein d'une station, **en ce que** chaque équipement est associé à un lecteur et **en ce que** chaque lecteur est associé à une unité de traitement d'informations dédiée correspondante.

7. Système selon l'une quelconque des revendications 1 à 5, **caractérisé en ce que** plusieurs équipements d'entretien sont associés au sein d'une station, **en ce que** chaque équipement est associé à un lecteur et **en ce que** les différents lecteurs sont associés à une unité de traitement d'informations commune.
